# EUROPÄISCHE PATENTANMELDUNG

(11) **EP 2 653 732 A2**
(43) Veröffentlichungstag der Anmeldung: **23.10.2013**
(21) Anmeldenummer: 13000512.7
(22) Anmeldetag: 01.02.2013
(51) Int. Cl.: F15B 13/08

(54) **Ventilanordnung aufweisend wenigstens zwei Ventileinheiten mit unterschiedlichen Nenndurchflussraten**

(30) Priorität: 20.04.2012 DE 102012007998
(71) Anmelder: ROBERT BOSCH GMBH, 70442 Stuttgart (DE)
(72) Erfinder: Paulus, Theo, 16509 Xanten (DE); Birke, Beno, 09117 Chemnitz (DE); Marais, Ludovic, F-74130 Ayze (FR); Gerecke, Wolf, 71706 Markgröningen (DE)
(74) Vertreter: Thürer, Andreas

(57) **Zusammenfassung**

Die Erfindung betrifft eine Ventilanordnung (400) aufweisend wenigstens zwei Ventileinheiten (401, 402) mit unterschiedlichen Nenndurchflussraten, wobei jede der wenigstens zwei Ventileinheiten (401, 402) zur Montage an einem Bestückungsplatz einer Anschlussplatte (501, 502) ausgebildet und, insbesondere elektrisch, betätigbar ist, um eine Fluidbeaufschlagung eines der Ventileinheit (401, 402) zugeordneten Anschlussplatten-Arbeitskanals in der Anschlussplatte (501, 502) zu steuern, wobei jede der wenigstens zwei Ventileinheiten (401, 402) eine Ventileinheiten-Bestückungsfläche, die bei der Bestückung mit einer Anschlussplatten-Bestückungsfläche der Anschlussplatte (501, 502) in Anordnung gebracht wird, aufweist, wobei jede der wenigstens zwei Ventileinheiten (401, 402) jeweils ein Längsschieberventil mit einem in einer Ventilbohrung axial verschiebbar gelagerten Ventilschieber aufweist, wobei eine die Nenndurchflussrate der jeweiligen Ventileinheit bestimmende Fläche in einem geöffneten Zustand des Längsschieberventils zwischen einer Steuerkante des Ventilschiebers und einer Innenkante der Ventilbohrung gebildet wird und sich die wenigstens zwei Ventileinheiten (401, 402) durch den Flächeninhalt der die Nenndurchflussrate definierenden Fläche unterscheiden.

## Beschreibung

Die vorliegende Erfindung betrifft eine Ventilanordnung aufweisend wenigstens zwei Ventileinheiten mit unterschiedlichen Nenndurchflussraten und ein Verfahren zum Konstruieren von zwei solchen Ventileinheiten.

### Stand der Technik

Die Erfindung geht aus von einer Ventilanordnung mit einer Anschlussplatte, die mindestens eine Anschlussplatten-Bestückungsfläche aufweist, die mehrere in einer Reihe nebeneinander angeordnete, zur Bestückung mit jeweils einer elektrisch oder fluidisch (z.B. pneumatisch) betätigbaren Ventileinheit (z.B. einem Mehrwegeventil) vorgesehene Bestückungsplätze definiert, wobei in der Anschlussplatte mindestens ein mit einer Druckquelle verbindbarer Anschlussplatten-Speisekanal und mindestens ein mit der Atmosphäre verbindbarer Anschlussplatten-Entlüftungskanal verlaufen, die jeweils zu jedem der Bestückungsplätze ausmünden, und wobei von jedem Bestückungsplatz mindestens ein die Anschlussplatte durchsetzender und mit einem Verbraucher verbindbarer individueller Anschlussplatten-Arbeitskanal ausgeht, dessen Fluidbeaufschlagung durch die am zugeordneten Bestückungsplatz montierte Ventileinheit steuerbar ist. Eine solche Ventilanordnung ist beispielsweise aus der WO 2007/140851 A1 bekannt.

Das Einsatzgebiet derartiger Ventilanordnungen erstreckt sich vornehmlich auf solche pneumatische bzw. allgemein fluidische Anlagen, bei denen mehrere Druckmittelaggregate, wie z.B. Druckmittelzylinder oder -drehantriebe, über Ventile anzusteuern sind. Hierbei hat sich eine örtliche Zusammenfassung der erforderlichen Ventile zu einer kompakten Baueinheit in Form einer Ventilanordnung ("Ventil-Anschlussplatten-System") bewährt.

Wie z.B. in der WO 2008/138371 A1 offenbart, werden in solchen Ventilanordnungen auch Ventileinheiten mit unterschiedlichen Nenndurchflussraten kombiniert. Nenndurchflussraten werden in der Pneumatik üblicherweise als Volumen pro Zeiteinheit angegeben, wobei das Volumen auf einen Normzustand (z.B. "Normliter" NI) bezogen ist (z.B. nach ISO 8778: Druck p₀ = 100 kPa, Temperatur T₀ = 20 °C, relative Feuchtigkeit Φ ≅ 65 %). Eine Nenndurchflussrate kann beispielsweise durch den maximalen Durchfluss pro Minute in [Nl/min] bei einem bestimmten Eingangsdruck (z.B. 7 bar), einem bestimmten Druckabfall über das Ventil (z.B. 1 bar), bei einer bestimmten Lufttemperatur (z.B. 20°C) und Luftfeuchtigkeit (z.B. 0%) angegeben werden.

Es ist wünschenswert, Ventileinheiten, welche unterschiedliche Nenndurchflussraten haben, auf möglichst einfache Weise zu erhalten und in einer Ventilanordnung zu kombinieren.

### Offenbarung der Erfindung

Erfindungsgemäß werden eine Ventilanordnung aufweisend wenigstens zwei Ventileinheiten mit unterschiedlichen Nenndurchflussraten und ein Verfahren zum Konstruieren von zwei solchen Ventileinheiten mit den Merkmalen der unabhängigen Patentansprüche vorgeschlagen. Vorteilhafte Ausgestaltungen sind Gegenstand der Unteransprüche sowie der nachfolgenden Beschreibung.

Im Rahmen der Erfindung wird die Ventilfunktionalität der Ventileinheit durch ein Längsschieberventil mit einem in einer Ventilbohrung axial verschiebbar gelagerten Ventilschieber realisiert, wobei eine, insbesondere ringförmig, die Nenndurchflussrate definierende Fläche in einem geöffneten Zustand der Ventileinheit zwischen einer Steuerkante des Ventilschiebers und einer Innenkante der Ventilbohrung gebildet wird, wobei sich Ventileinheiten, welche unterschiedlichen Nenndurchflussraten angehören, durch den Flächeninhalt der die Nenndurchflussrate definierenden Fläche unterscheiden.

Der Flächeninhalt der die Nenndurchflussrate definierenden Fläche wird besonders einfach und zweckmäßig durch Veränderung des Abstands der Steuerkante des Ventilschiebers von der Innenkante der Ventilbohrung verändert. Dabei ist besonders vorteilhaft, wenn beim Übergang zu einer, insbesondere nächst, höheren Nenndurchflussrate die Projektion des Abstands auf eine Längs- oder Querachse unverändert bleibt. Mit anderen Worten ändert sich beim Übergang zu der höheren Nenndurchflussrate entweder nur die Projektion des Abstands auf eine Quer oder nur die Projektion des Abstands auf eine Längsachse.

Eine Veränderung des Flächeninhalts der die Nenndurchflussrate definierenden Fläche kann besonders einfach durch eine axiale Streckung des Ventilschiebers und/oder der Ventilbohrung erzielt werden. Hierbei ergibt sich besonders einfach und zweckmäßig eine Veränderung der Projektion des Abstands auf eine Querachse (d.h. eine radiale Vergrößerung des Ventilschiebers bzw. der Ventilbohrung) durch eine axiale Streckung an einer Längsachse und eine Veränderung der Projektion des Abstands auf eine Längsachse (d.h. eine axiale Vergrößerung des Ventilschiebers bzw. der Ventilbohrung) durch eine axiale Streckung an einer Querachse. Eine axiale Streckung ist aus der Geometrie bekannt. Die Streckung wird durchgeführt, indem von jedem Punkt des Objekts ein Lot auf die Bezugsachse gefällt und der Abstand des Punktes von der Bezugsachse mit dem Streckfaktor gestreckt wird.

Der Übergang zu der höheren Nenndurchflussrate erfolgt vorzugsweise durch nur eine axiale Streckung. Beim Übergang zu der höheren Nenndurchflussrate kann daher vorteilhaft die Baulänge (bei radialer Vergrößerung) bzw. die Baubreite (bei axialer Vergrößerung) der Ventileinheit gleichgehalten werden. Die Bauhöhe der Ventileinheit kann vorteilhafterweise immer gleichgehalten werden, da sie üblicherweise ohnehin hoch genug ist, um das Längsschieberventil aufzunehmen.

Die Erfindung erlaubt auf sehr einfache Weise, ausgehend von einer Refererenzventileinheit zahlreiche Ventileinheiten mit anderen Nenndurchflussraten, die höher oder niedriger sein können, zu entwickeln und zu konstruieren. Erprobungsergebnisse können übertragen werden. Beispielsweise ist eine Qualifizierung, z.B. Dauerlauferprobung, nur an der Ventilausführung mit dem längsten Schieberhub notwendig. Bedingt durch diesen Worst Case Ansatz sind alle Ventil-Varianten mit kleineren Schieberhüben unkritischer hinsichtlich verschleißbedingten Ausfalls. Die sog. "time to market" kann reduziert werden.

Eine einfache Aneinanderreihung von Ventileinheiten mit unterschiedlichen Nenndurchflussraten, welche applikationsabhängig gewählt werden können, in einer Ventilanordnung ist realisierbar. Auch das äußere Erscheinungsbild von Ventileinheiten mit unterschiedlichen Nenndurchflussraten kann einander gleichen oder ähneln. Weiterhin kann eine höhere Gleichteileverwendung, z.B. von Schieberdichtungen, Anschlusselementen, Betätigungselementen u.v.m., erreicht werden.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt in einer schematischen Seitenansicht eine Ventileinheit gemäß einer bevorzugten Ausführungsform der Erfindung, wobei Pilotmodul und Ventilmodul voneinander getrennt sind.
- Figur 2: zeigt eine Ventilanordnung gemäß einer bevorzugten Ausführungsform der Erfindung, wobei eine Ventileinheit in einer schematischen Seitenansicht und eine Anschlussplatte in einer Längsschnittansicht entlang eines Bestückungsplatzes dargestellt sind.
- Figur 3: zeigt schematisch ein Längsschieberventil in einer Längsschnittsansicht mit einem vergrö-βerten Detail zur Veranschaulichung der die Nenndurchflussrate bestimmenden Fläche.
- Figur 4: zeigt gemäß einer besonders bevorzugten Ausführungsform der Erfindung drei Längsschieberventile, die durch axiale Streckung auseinander hervorgehen.
- Figur 5: zeigt eine bevorzugte Ausführungsform einer erfindungsgemäßen Ventilanordnung in einer perspektivischen Ansicht.

### Detaillierte Beschreibung der Zeichnung

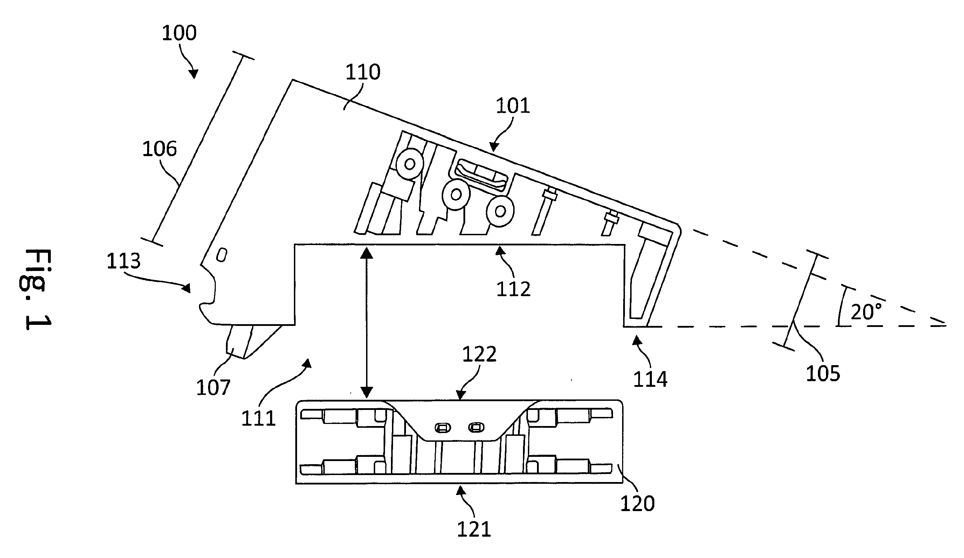

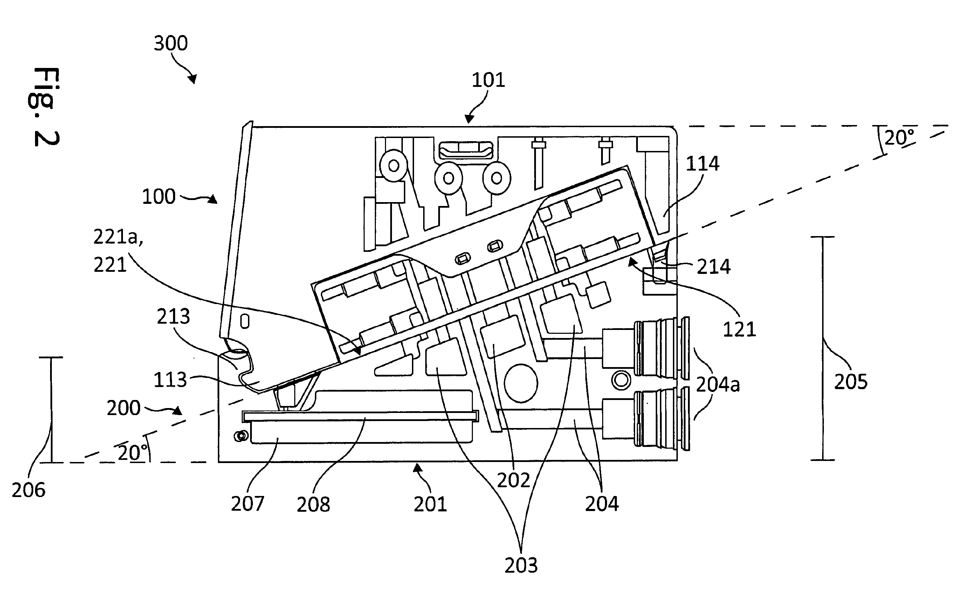

Die Figuren 1 und 2 werden nachfolgend zusammenhängend und übergreifend beschrieben, wobei gleiche Elemente mit gleichen Bezugszeichen versehen sind. In Figur 1 ist eine Ventileinheit 100 gemäß einer bevorzugten Ausführungsform der Erfindung in einer schematischen Seitenansicht dargestellt. In Figur 2 ist eine Ventilanordnung 300 gemäß einer bevorzugten Ausführungsform der Erfindung dargestellt, wobei die Ventileinheit 100 in einer schematischen Seitenansicht und eine Anschlussplatte 200 in einer Längsschnittsansicht dargestellt sind. Die Längsschnittsansicht der Anschlussplatte 200 in Figur 2 verläuft entlang eines Bestückungsplatzes 221a einer Anschlussplatte-Bestückungsfläche 221.

Die Anschlussplatten-Bestückungsfläche 221 weist mehrere Bestückungsplätze 221a auf, wobei an jedem Bestückungsplatz 221 a eine Ventileinheit 100 montierbar ist. Auf diese Weise wird gemäß dem sogenannten Anschlussplattenprinzip eine Anschlussplatte 200 mit mehreren Ventileinheiten 100 kombiniert, um eine Ventilanordnung 300 zu bilden. In Figur 2 sind dazu die einzelnen Ventileinheiten in einer Richtung senkrecht zur Zeichenebene nebeneinander angeordnet.

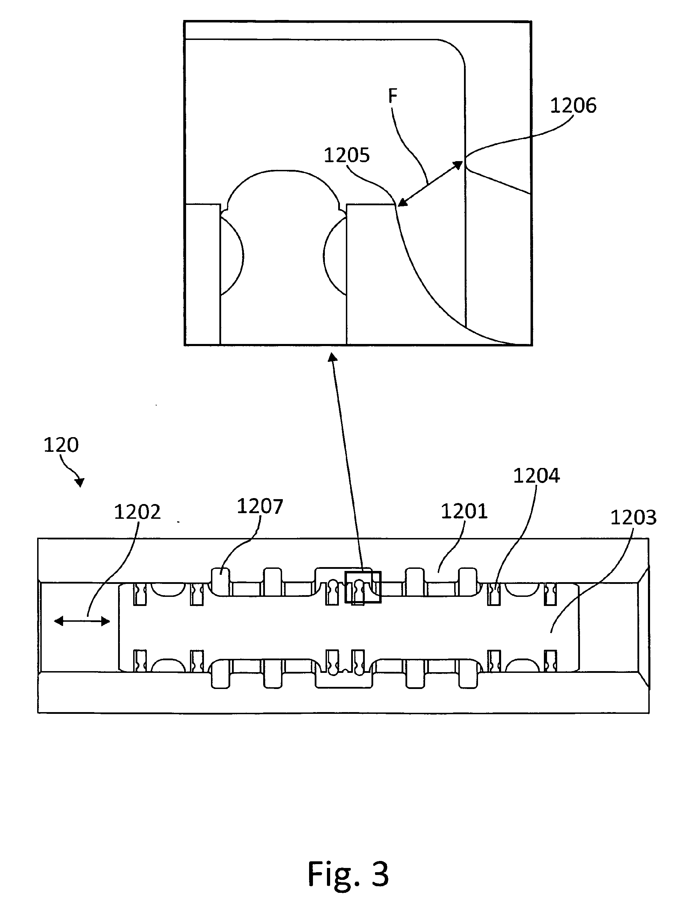

Die Ventileinheit 100 ist hier elektrisch betätigbar und besteht aus einem Pilotmodul 110 sowie einem Ventilmodul 120, die vorzugsweise strukturell voneinander getrennt sind. Das Pilotmodul 110 enthält diejenigen Komponenten, die zur Steuerung bzw. Betätigung der Ventileinheit benötigt werden, wohingegen die Komponenten zur Erfüllung der Ventilfunktionalität strukturell in dem Ventilmodul 120 zusammengefasst sind. Die Komponenten zur Erfüllung der Ventilfunktionalität bilden ein Längsschieberventil, wie in Figur 3 gezeigt.

In dem Ventilmodul 120 ist eine Schieberbohrung vorgesehen, in der ein Ventilschieber hin und her bewegbar angeordnet ist, wie es in Figur 3 gezeigt ist. In der dargestellten Ausführungsform weist das Ventilmodul 120 eine Ventileinheiten-Bestückungsfläche 121 auf, die bei der Montage der Ventileinheit 100 an einem der Bestückungsplätze 221a der Anschlussplatte 200 mit der Anschlussplatten-Bestückungsfläche 221 in Anordnung gebracht wird und wechselwirkt. In der Ventileinheiten-Bestückungsfläche 121 sind insbesondere Öffnungen vorgesehen, die mit der Schieberbohrung verbunden sind und die durch unterschiedliche Stellungen des Schiebers auf unterschiedliche Weise miteinander in Fluidverbindung stehen. Dies ist im Stand der Technik für Mehrwegeventile hinlänglich bekannt.

Das Ventilmodul 120 weist weiterhin an seiner Ventilmodul-Oberseite 122 Steueröffnungen für den Ventilschieber auf, durch die insbesondere eine Betätigung des Ventilschiebers zur Erreichung unterschiedlicher Schaltstellungen erzielbar ist.

Das Pilotmodul 110 weist eine Aussparung 111 zur Aufnahme des Ventilmoduls 120 auf. Eine Begrenzung der Aussparung bildet eine Pilotmodul-Unterseite 112, welche mit der Ventilmodul-Oberseite 122 in Wechselwirkung tritt. Auch an der Pilotmodul-Unterseite 112 sind Öffnungen vorgesehen, durch welche die Fluidbeaufschlagung des Ventilschiebers zur Bereitstellung der Ventilfunktionalität erfolgen kann. Zu diesem Zweck ist das Pilotmodul 110 insbesondere auch mit einem Anschlussplatten-Speisekanal verbindbar.

Wie dargestellt, erfolgt das Einsetzen des Ventilmoduls 120 in das Pilotmodul 110 im Wesentlichen senkrecht zur abzudichtenden Fläche zwischen 112 und 122, so dass dort ein statisches Dichtungselement vorgesehen werden kann, welches durch das Zusammensetzen nicht auf Zug oder Scherung belastet wird. Das Ventilmodul 120 kann in das Pilotmodul 110 eingesetzt und daraus wieder zerstörungsfrei entnommen werden.

In der Anschlussplatte verlaufen ein mit einer Druckquelle (beispielsweise einem Druckluftkompressor) verbindbarer Anschlussplatten-Speisekanal 202 sowie zwei mit der Atmosphäre verbindbare Anschlussplatten-Entlüftungskanäle 203, die jeweils zu jedem der Bestückungsplätze 22 1 a ausmünden. In der gezeigten Ausführungsform sind weiterhin zwei Anschlussplatten-Arbeitskanäle 204 vorgesehen, die von dem Bestückungsplatz 221a ausgehen und mit Fluidanschlüssen 204a, welche mit einem Verbraucher verbindbar sind, verbunden werden. Die Fluidbeaufschlagung der Anschlussplatten-Arbeitskanäle 204 wird durch die am zugeordneten Bestückungsplatz 221a montierte Ventileinheit 100 gesteuert.

Der Ventileinheiten-Bestückungsfläche 121 liegt eine Ventileinheiten-Oberseite 101 gegenüber, wenn das Ventilmodul 120 in das Pilotmodul 110 eingesetzt, also die Ventileinheit gebildet ist. Wie ersichtlich, verlaufen Ventileinheiten-Bestückungsfläche 121 und Ventileinheiten-Oberseite 101 nicht parallel, sondern schließen einen Winkel ein, der im gezeigten Beispiel ca. 20° beträgt. Dies führt im Wesentlichen zu einer Keilform der Ventileinheit 100 im Längsschnitt entlang der Ventileinheiten-Bestückungsfläche 121. Auf diese Weise werden zwischen der Ventileinheiten-Bestückungsfläche 121 und der Ventileinheiten-Oberseite 101 eine kleinere Ventileinheitenhöhe 105 und eine größere Ventileinheitenhöhe 106 definiert. Eine Veränderung des Winkels erlaubt, für Ventileinheiten mit unterschiedlichen Nenndurchflussraten die Maße der Ventileinheit vorteilhaft zu beeinflussen. Der Winkel kann beispielsweise bis zu 45° betragen. Die Ventileinheit 100 weist im Bereich der größeren Ventileinheitenhöhe 106 elektrische Verbindungsmittel 107 auf, z.B. Druckstifte, die elektrische Kontakte des Pilotmoduls 110 der Ventileinheit nach außen führen.

Der Anschlussplatten-Bestückungsfläche 221 liegt eine Anschlussplatten-Unterseite 201 gegenüber. Wie ersichtlich, verlaufen Anschlussplatten-Bestückungsfläche 221 und Anschlussplatten-Unterseite 201 nicht parallel, sondern schließen ebenfalls einen Winkel ein. Die Größe dieses Winkels ist entspricht zweckmäßigerweise dem entsprechenden Winkel zugehöriger Ventileinheiten, um insgesamt eine rechteckige Form zu erreichen. Dies führt im Wesentlichen zu einer Keilform der Anschlussplatte 200 im Längsschnitt entlang eines Bestückungsplatzes 221a. Auf diese Weise werden zwischen der Anschlussplatten-Bestückungsfläche 221 und der gegenüberliegenden Anschlussplatten-Unterseite 201 eine kleinere Anschlussplattenhöhe 206 sowie eine größere Anschlussplattenhöhe 205 definiert.

Im montierten Zustand definiert die kleinere Anschlussplattenhöhe 206 zusammen mit der größeren Ventileinheitenhöhe 106 eine Höhe der Ventilanordnung 300. Dasselbe gilt mutatis mutandis für die größere Anschlussplattenhöhe 205 und die kleinere Ventileinheitenhöhe 105. Wie in Figur 2 erkennbar, weist die Ventilanordnung im montierten Zustand eine im Wesentlichen rechteckige Längsschnittsfläche entlang eines Bestückungsplatzes auf.

An der Ventileinheit 100, hier am Pilotmodul 110, sind im Bereich der größeren Ventileinheitenhöhe 106 ein Ventileinheiten-Befestigungsmittel 113 und im Bereich der kleineren Ventileinheitenhöhe 105 ein Ventileinheiten-Befestigungsmittel 114 vorgesehen. Die Ventileinheiten-Befestigungsmittel 113, 114 dienen zur sicheren Montage der Ventileinheit 100 an der Anschlussplatte 200.

An der Anschlussplatte 200 sind im Bereich der kleineren Anschlussplattenhöhe 206 ein Anschlussplatten-Befestigungsmittel 213 und im Bereich der größeren Anschlussplattenhöhe 205 ein Anschlussplatten-Befestigungsmittel 214 vorgesehen, welches jeweils mit dem zugehörigen Ventileinheiten-Befestigungsmittel in Wechselwirkung tritt, um die Ventileinheit 100 im montierten Zustand sicher zu fixieren.

In der dargestellten bevorzugten Ausführungsform ist das Ventileinheiten-Befestigungsmittel 113 im Bereich der größeren Ventileinheitenhöhe 106 als Element einer Hakenverbindung 113, 213 ausgebildet, hier als Haken 113, der in das zugehörige Anschlussplatten-Befestigungsmittel 213 eingreifen kann. Das im Bereich der kleineren Ventileinheitenhöhe 105 vorgesehene Ventileinheiten-Befestigungsmittel 114 ist hier als Schraube ausgebildet, welche in das zugehörige Anschlussplatten-Befestigungsmittel 214 eingreifen kann.

Das im Bereich der kleineren Anschlussplattenhöhe 206 vorgesehene Anschlussplatten-Befestigungsmittel 213 ist als Element einer Hakenverbindung, hier als Haken 213, ausgebildet, der mit dem zugehörigen Haken 113 der Ventileinheit 100 verhakt werden kann. Das im Bereich der größeren Anschlussplattenhöhe 205 vorgesehene Anschlussplatten-Befestigungsmittel 214 ist als Gewindebohrung ausgebildet, in die die Schraube 114 der Ventileinheit 100 eingeschraubt werden kann. Das im Bereich der größeren Anschlussplattenhöhe 205 vorgesehene Anschlussplatten-Befestigungsmittel sowie das zugehörige im Bereich der kleineren Ventileinheitenhöhe 105 vorgesehene Ventileinheiten-Befestigungsmittel können zusammen auch einen Bajonettverschluss bilden, wobei das Ventileinheiten-Befestigungsmittel vorzugsweise als Bolzen bspw. mit abstehenden Zapfen ausgebildet ist, der in eine Öffnung mit entsprechenden Nuten eingreift. Auch andere Arten von Bajonettverschlüssen sind bevorzugt.

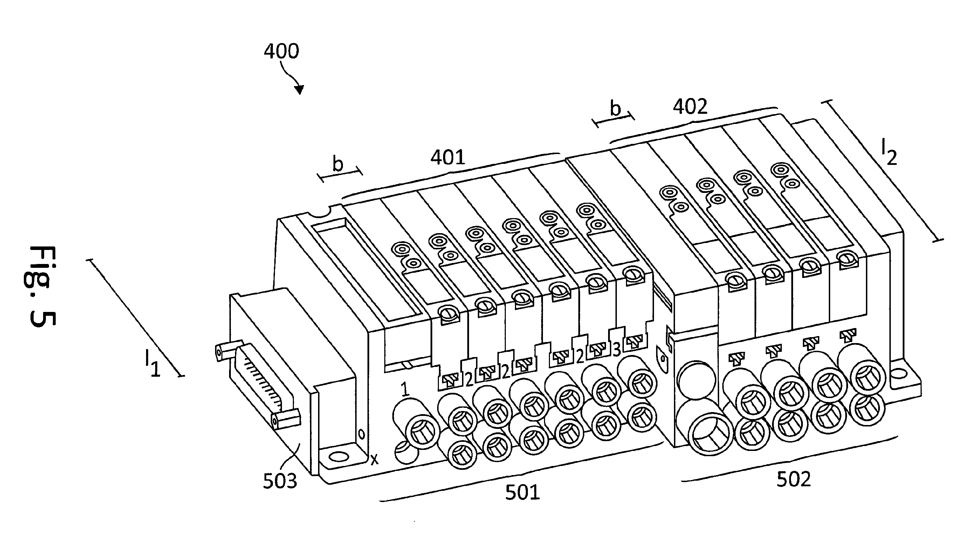

In der Anschlussplatte 200 ist weiterhin im Bereich der kleineren Anschlussplattenhöhe 206 eine Aussparung 207 zur Aufnahme elektrischer Verbindungsmittel 208 vorgesehen. Die Verbindungsmittel 208 sind hier beispielhaft als Platine ausgebildet, auf der Zuleitungen für jedes Pilotmodul einer montierten Ventileinheit vorgesehen sind. Die Zuleitungen auf der Platine verbinden auf diese Weise die Pilotmodule über deren elektrische Verbindungsmittel 107 und z.B. über elektrische Verbindungsmittel 503 gemäß Figur 5 mit einer Steuerschaltung (nicht gezeigt), welche die Ansteuerung der montierten Ventileinheiten wahrnimmt.

Es ist in der Längsschnittsansicht entlang eines Bestückungsplatzes erkennbar, dass ein wesentlicher Höhenbedarf der Anschlussplatte an einem Bestückungsplatz 221 a durch die Fluidanschlüsse 204a zu den Verbrauchern hervorgerufen wird. Andererseits erfordert die elektrische Verbindung relativ wenig Platz, so dass im Rahmen der Erfindung eine vorteilhafte Raumausnutzung dadurch erreicht wird, dass die das Fluid betreffenden Komponenten im Wesentlichen im Bereich der größeren Anschlussplattenhöhe 205 und die die Elektrik betreffenden Komponenten eher im Bereich der kleineren Anschlussplattenhöhe 206 angeordnet sind. Entsprechendes gilt für die Ventileinheit 100, in der die Steuerkomponenten des Pilotmoduls den wesentlichen Höhenbedarf definieren, wohingegen das Fluid betreffend relativ kleine Kanäle ausreichen, was insgesamt ebenfalls eine Anordnung in einer Keilform zulässt.

Durch die dargestellte strukturelle Trennung von Pilotmodul einerseits und Ventilmodul andererseits können defekte Elemente leicht und kostengünstig gewechselt werden. Im Wesentlichen unterliegt nur das Ventilmodul Verschleiß, wohingegen das Pilotmodul im Wesentlichen eine relativ lange Lebensdauer hat. Dies führt zu einer signifikanten Kostenersparnis.

In Figur 3 ist zur Veranschaulichung einer erfindungsgemäßen Veränderung der die Nenndurchflussrate bestimmenden Fläche ein bevorzugtes Längsschieberventil schematisch im Längsschnitt dargestellt, wobei es sich insbesondere um einen Längsschnitt durch ein Ventilmodul 120 handeln kann. Zur Veranschaulichung der die Nenndurchflussrate bestimmenden Fläche ist ein Ausschnitt vergrößert dargestellt. Das Ventilmodul 120 weist ein Gehäuse 1201 mit einer Ventilbohrung 1202 auf. In die Ventilbohrung 1202 münden (hier vier) Kanäle (d.h. Speisekanal, Entlüftungskanal, Arbeitskanäle), deren Mündungsbereiche 1207 sich hier ringförmige oder halbringförmig um die Ventilbohrung erstrecken.

In der Ventilbohrung ist ein mit Dichtungen 1204 (z. B. Dichtungsringen) ausgestatteter Ventilschieber 1203 axial verschiebbar gelagert. Die (hier sechs) Dichtungen 1204 umgeben den Ventilschieber 1203 und sind in entsprechenden Aussparungen angeordnet. Die Bewegung des Ventilschiebers zur Betätigung des Ventils wird durch seitliche Fluidbeaufschlagung, hier durch das Pilotmodul, gesteuert.

Eine die Nenndurchflussrate des Ventilmoduls 120 und damit der zugehörigen Ventileinheit bestimmende Fläche F wird in dem gezeigten geöffneten Zustand des Ventils durch die Fläche zwischen einer sogenannten Steuerkante 1205 des Ventilschiebers und einer Innenkante 1206 der Ventilbohrung gebildet. Die Ventilbohrung 1202 sowie der Ventilschieber 1203 sind im Wesentlichen zylinderförmig ausgebildet, so dass sich für die die Nenndurchflussrate bestimmende Fläche eine Ringform ergibt, die im vorliegenden Beispiel einer Kegelstumpfmantelfläche entspricht, ebenso jedoch einer Zylindermantelfläche oder einer Kreisringform entsprechen kann. Der Abstand zwischen der Steuerkante 1205 des Ventilschiebers und der Innenkante 1206 der Ventilbohrung im geöffneten Zustand des Ventils entspricht der Länge des Pfeils F.

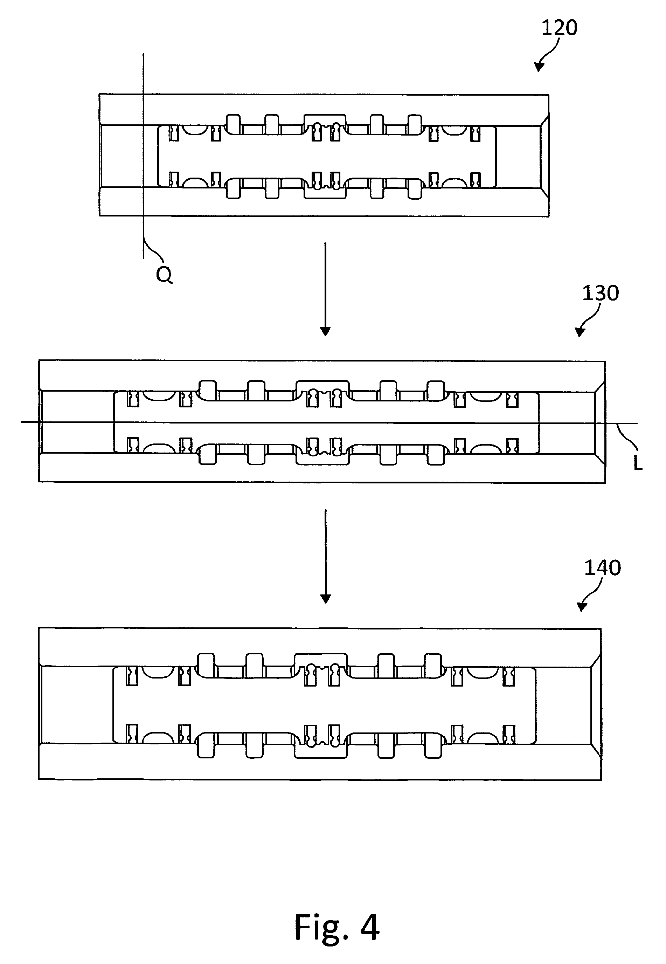

Zwei Ventileinheiten mit unterschiedlichen Nenndurchflussraten unterscheiden sich hier durch den Flächeninhalt ihrer die Nenndurchflussrate definierenden Fläche. Im Rahmen der Erfindung wurde nun eine einfache Möglichkeit entwickelt, um diese Fläche auf möglichst einfache Weise zu verändem, wobei der Entwicklungs- und Konstruktionsaufwand gering bleibt. Die Erfindung bedient sich dazu in besonders bevorzugter Ausgestaltung dem aus der Geometrie bekannten Konzept der axialen Streckung, wobei beim Übergang zu einer (insbesondere nächst) höheren Nenndurchflussrate immer nur genau eine axiale Streckung durchgeführt wird. Als Achsen für die axiale Streckung bieten sich, wie in Figur 4 gezeigt, eine Längsachse L (d.h. entlang der Bewegungsrichtung des Ventilschiebers 1203), oder eine Querachse Q (d.h. quer zur Bewegungsrichtung des Ventilschiebers 1203) an.

In Figur 4 sind drei Ventilmodule bzw. Längsschieberventile 120, 130, 140 im Längsschnitt gezeigt, die durch axiale Streckung der Längsschieber und Schieberbohrungen erzeugt werden.

Das Ventilmodul 130 weist eine im Vergleich zum Ventilmodul 120 (insbesondere nächst) höhere Nenndurchflussrate auf und geht aus dem Ventilmodul 120 durch axiale Streckung an einer Querachse Q hervor. Die axiale Streckung an der Querachse Q führt zu einer Verlängerung (axiale Vergrößerung) des Ventilmoduls, wobei jedoch Breite und Höhe (wie auch der Durchmesser des Ventilschiebers sowie der Schieberbohrung) gleich bleiben. Durch die Verlängerung werden der Abstand zwischen Steuerkante des Ventilschiebers und Innenkante der Schieberbohrung sowie die Projektion des Abstands auf die Längsachse vergrößert und dadurch der Flächeninhalt der Fläche F, nicht jedoch ihre Umfänge und auch nicht die Projektion des Abstands auf die Querachse. Die Breite des Ventilmoduls und damit der zugehörigen Ventileinheit (d.h. die Erstreckung in die Zeichenebene hinein in Figur 1) bleibt erhalten.

Das Ventilmodul 140 weist eine im Vergleich zum Ventilmodul 130 (insbesondere nächst) höhere Nenndurchflussrate auf und geht aus dem Ventilmodul 130 durch axiale Streckung an einer Längsachse L hervor. Die axiale Streckung an der Längsachse L führt zu einer radialen Vergrößerung (des Ventilschiebers sowie der Schieberbohrung) des Ventilmoduls, wobei jedoch die Länge gleich bleibt. Durch die radiale Vergrößerung werden der Abstand zwischen Steuerkante des Ventilschiebers und Innenkante der Schieberbohrung sowie die Projektion des Abstands auf die Querachse vergrößert und dadurch der Flächeninhalt der Fläche F, nicht jedoch die Projektion des Abstands auf die Längsachse. Die Länge des Ventilmoduls und damit der zugehörigen Ventileinheit (d.h. die vertikale Erstreckung in Figur 1) bleibt erhalten.

In Figur 5 ist eine Ausführungsform einer erfindungsgemäßen Ventilanordnung 400 schematisch in einer perspektivischen Ansicht dargestellt. Die Ventilanordnung 400 weist unter anderem eine Anzahl von ersten Ventileinheiten 401 mit einer ersten Nenndurchflussrate und eine zugehörige Anschlussplatte 501 sowie eine Anzahl von zweiten Ventileinheiten 402 mit einer zweiten, höheren Nenndurchflussrate und eine zugehörige Anschlussplatte 502 auf. Vorzugsweise sind die Aussparungen zur Aufnahme der elektrischen Verbindungsmittel in den Anschlussplatten 501 und 502 gleich ausgebildet, so dass beide Anschlussplatten 501, 502 mit demselben elektrischen Verbindungsmittel 503 ausgerüstet werden können, welches hier beispielhaft eine als sogenannte elektrische Multipolverbindung einer Ventilanordnung ausgebildet ist.

In dem gezeigten Beispiel weisen alle Ventileinheiten-Bestückungsflächen der Ventileinheiten 401, 402 dieselbe Breite b auf, wohingegen jedoch die Länge l₂ der Ventileinheiten-Bestückungsfläche der Ventileinheiten 402 länger als die Länge l₁ der Ventileinheiten-Bestückungsfläche der Ventileinheiten 401 ist. Dies rührt daher, dass die Längsschieber und Schieberbohrungen der Ventileinheiten 402 unter Einsatz einer axialen Streckung an einer Querachse, welche zu einer axialen Vergrößerung führt, wie es unter Bezugnahme auf Figur 4 erläutert worden ist, aus den Längsschiebern und Schieberbohrungen der Ventileinheiten 401 erhalten werden. Dementsprechend weisen auch die zugehörigen Anschlussplatten 501 bzw. 502 unterschiedliche Erstreckungen entlang eines Bestückungsplatzes auf. Eine weitere, nicht dargestellte Ausführungsfonn einer erfindungsgemäßen Ventilanordnung würde Ventileinheiten mit unterschiedlicher Breite, jedoch gleicher Länge aufweisen. Es sei betont, dass eine erfindungsgemäße Ventilanordnung auch mehr als zwei Typen von Ventileinheiten aufweisen kann.

## Patentansprüche

1. Ventilanordnung (300, 400) aufweisend wenigstens zwei Ventileinheiten (100, 401, 402) mit unterschiedlichen Nenndurchflussraten, wobei jede der wenigstens zwei Ventileinheiten (100, 401, 402) zur Montage an einem Bestückungsplatz (221 a) einer Anschlussplatte (200, 501, 502) ausgebildet und, insbesondere elektrisch, betätigbar ist, um eine Fluidbeaufschlagung eines der Ventileinheit (100) zugeordneten Anschlussplatten-Arbeitskanals (204) in der Anschlussplatte (200, 501, 502) zu steuern, wobei jede der wenigstens zwei Ventileinheiten (100, 401, 402) eine Ventileinheiten-Bestückungsfläche (121), die bei der Bestückung mit einer Anschlussplatten-Bestückungsfläche (221) der Anschlussplatte (200, 501, 502) in Anordnung gebracht wird, aufweist,
wobei jede der wenigstens zwei Ventileinheiten (100, 401, 402) jeweils ein Längsschieberventil (120, 130, 140) mit einem in einer Ventilbohrung (1202) axial verschiebbar gelagerten Ventilschieber (1203) aufweist,
wobei eine die Nenndurchflussrate der jeweiligen Ventileinheit bestimmende Fläche (F) in einem geöffneten Zustand des Längsschieberventils (120, 130, 140) zwischen einer Steuerkante (1205) des Ventilschiebers und einer Innenkante (1206) der Ventilbohrung gebildet wird und sich die wenigstens zwei Ventileinheiten (100, 401, 402) durch den Abstand der Steuerkante (1205) des Ventilschiebers von der Innenkante (1206) der Ventilbohrung voneinander unterscheiden.

2. Ventilanordnung (300, 400) nach Anspruch 1, wobei eine erste (401) der wenigstens zwei Ventileinheiten eine erste Nenndurchflussrate und eine zweite (402) der wenigstens zwei Ventileinheiten eine zweite, höhere Nenndurchflussrate hat und wobei die Projektion des Abstands auf eine Längsachse (L) oder eine Querachse (Q) bei den wenigstens zwei Ventileinheiten (100, 401, 402) gleich ist.

3. Ventilanordnung nach Anspruch 2, wobei die Projektion des Abstands auf die jeweils andere Achse (Q, L) bei der zweiten Ventileinheit (402) größer als bei der ersten Ventileinheit (401) ist.

4. Ventilanordnung (300, 400) nach einem der vorstehenden Ansprüche, wobei die Ventilschieber (1203) der wenigstens zwei Ventileinheiten (100, 401, 402) unter Einsatz einer axialen Streckung aufeinander abgebildet werden können.

5. Ventilanordnung (300, 400) nach Anspruch 4, wobei die axiale Streckung an einer Längsachse (L) oder einer Querachse (Q) eines der Ventilschieber (1203) stattfindet.

6. Ventilanordnung nach Anspruch 4 oder 5, wobei eine erste (401) der wenigstens zwei Ventileinheiten eine erste Nenndurchflussrate und eine zweite (402) der wenigstens zwei Ventileinheiten eine zweite, höhere Nenndurchflussrate hat und wobei die Ventilschieber (1203) der wenigstens zwei Ventileinheiten (401, 402) unter Einsatz genau einer axialen Streckung aufeinander abgebildet werden können

7. Ventilanordnung (300, 400) nach einem der vorstehenden Ansprüche, wobei die Ventilbohrungen (1202) der wenigstens zwei Ventileinheiten (100, 401, 402) unter Einsatz einer axialen Streckung aufeinander abgebildet werden können.

8. Ventilanordnung (300, 400) nach Anspruch 7, wobei die axiale Streckung an einer Längsachse (L) oder einer Querachse (Q) einer der Ventilbohrungen (1202) stattfindet.

9. Ventilanordnung nach Anspruch 7 oder 8, wobei eine erste (401) der wenigstens zwei Ventileinheiten eine erste Nenndurchflussrate und eine zweite (402) der wenigstens zwei Ventileinheiten eine zweite, höhere Nenndurchflussrate hat und wobei die Ventilbohrungen (1202) der wenigstens zwei Ventileinheiten (401, 402) unter Einsatz genau einer axialen Streckung aufeinander abgebildet werden können.

10. Ventilanordnung nach Anspruch 2, 6 oder 9, wobei die Ventileinheiten-Bestückungsfläche der zweiten Ventileinheit breiter als die Ventileinheiten-Bestückungsfläche der ersten Ventileinheit ist und wobei die Ventileinheiten-Bestückungsfläche der zweiten Ventileinheit genauso lang wie die Ventileinheiten-Bestückungsfläche der ersten Ventileinheit ist.

11. Ventilanordnung nach Anspruch 2, 6 oder 9, wobei die Ventileinheiten-Bestückungsfläche der zweiten Ventileinheit (402) länger als die Ventileinheiten-Bestückungsfläche der ersten Ventileinheit (401) ist und wobei die Ventileinheiten-Bestückungsfläche der zweiten Ventileinheit (402) genauso breit wie die Ventileinheiten-Bestückungsfläche der ersten Ventileinheit (401) ist.

12. Verfahren zum Konstruieren einer ersten Ventileinheit (401) mit einer ersten Nenndurchflussrate ausgehend von einer zweiten Ventileinheit (402) mit einer zweiten, von der ersten verschiedenen Nenndurchflussrate, wobei jede der Ventileinheiten (401, 402) zur Montage an einem Bestückungsplatz (221a) einer Anschlussplatte (200, 501, 502) ausgebildet und, insbesondere elektrisch, betätigbar ist, um eine Fluidbeaufschlagung eines der Ventileinheit (401, 402) zugeordneten Anschlussplatten-Arbeitskanals (204) in der Anschlussplatte (200, 501, 502) zu steuern, wobei jede der zwei Ventileinheiten (100, 401, 402) eine Ventileinheiten-Bestückungsfläche (121), die bei der Bestückung mit einer Anschlussplatten-Bestückungsfläche (221) der Anschlussplatte (200, 501, 502) in Anordnung gebracht wird, aufweist,
wobei jede der wenigstens zwei Ventileinheiten (100, 401, 402) jeweils ein Längsschieberventil (120, 130, 140) mit einem in einer Ventilbohrung (1202) axial verschiebbar gelagerten Ventilschieber (1203) aufweist,
wobei eine die Nenndurchflussrate der jeweiligen Ventileinheit bestimmende Fläche (F) in einem geöffneten Zustand des Längsschieberventils (120, 130, 140) zwischen einer Steuerkante (1205) des Ventilschiebers und einer Innenkante (1206) der Ventilbohrung gebildet wird und wobei die erste Ventileinheit (401) so konstruiert wird, dass sie sich von der zweiten Ventileinheit durch den Abstand der Steuerkante (1205) des Ventilschiebers von der Innenkante (1206) der Ventilbohrung unterscheidet.

13. Verfahren nach Anspruch 12, wobei die erste Ventileinheit (401) unter Einsatz einer axialen Streckung ausgehend von der zweiten Ventileinheit (402) konstruiert wird.
